# EUROPÄISCHE PATENTANMELDUNG

(11) **EP 3 527 637 A1**
(43) Veröffentlichungstag der Anmeldung: **21.08.2019**
(21) Anmeldenummer: 19157688.3
(22) Anmeldetag: 18.02.2019
(51) Int. Cl.: C09J 5/00, C09J 5/02, C09D 9/00

(54) **SUBSTANZ FÜR EINE KLEBEVERBINDUNG**

(30) Priorität: 19.02.2018 EP 18157326
(71) Anmelder: Bio-Circle Surface Technology GmbH, 33334 Gütersloh (DE)
(72) Erfinder: Schürer, Anne-Catrin, 33330 Gütersloh (DE); Große, Birgit, 33415 Verl (DE)
(74) Vertreter: Pellengahr, Maximilian Rudolf

(57) **Zusammenfassung**

Die Erfindung betrifft eine Substanz (7) für eine Klebeverbindung (1) zwischen einem ersten Substrat (3), auf dessen Oberfläche (2) eine hoch viskose Klebemasse (4) auftragbar ist, und einem zweiten Substrat (6), dessen Oberfläche (5) auf die Klebemasse (4) aufsetzbar ist, wobei nach Aushärten der viskosen Klebemasse (4) sich eine feste Klebeverbindung (1) zwischen den Substraten (3, 6) einstellt.

Um eine Substanz bereitzustellen, mittels derer Klebeverbindungen besser lösbar sind, wird erfindungsgemäß vorgeschlagen, dass die Substanz (7) ein Gemisch aus mindestens zwei Estern und mindestens zwei Ethern umfasst, wobei mindestens ein Ester von einem natürlichen Ester und mindestens ein Ester von einem synthetischen Ester gebildet sind und wobei mindestens ein Ether von einem synthetischen Ether gebildet ist.

## Beschreibung

### Einleitung

Die Erfindung betrifft eine Substanz für eine Klebeverbindung gemäß dem Oberbegriff von Anspruch 1. Ferner betrifft die vorliegende Anmeldungen Verwendungen einer solchen Substanz gemäß den Ansprüchen 11 und 12 sowie ein Verfahren zur Verklebung zweier Substrate mittels einer Substanz gemäß dem Oberbegriff von Anspruch 13.

Eine Klebeverbindung, für die die Substanz geeignet ist, ist insbesondere dazu geeignet, zwei Substrate miteinander zu verbinden, wobei eine typischerweise hoch viskose Klebemasse verwendet wird, die insbesondere mittels eines Trägerstreifens auf eine Oberfläche eines ersten Substrates, wie beispielsweise eine lackierte Oberfläche, Kunststoffoberfläche, Edelstahloberfläche, Stahl- oder Holzoberfläche aufgetragen wird. Auf die Klebemasse ist sodann eine weitere Oberfläche eines zweiten Substrats aufsetzbar, wobei sich nach Aushärten der Klebemasse eine feste Verbindung zwischen den Substraten einstellt.

### Stand der Technik

Bei Klebeverbindungen gemäß dem Stand der Technik gilt es insbesondere, die zu verbindenden Teile betreffend der zu verklebenden Oberflächen zu reinigen, damit seitens des Klebers eine gute Haftwirkung an diesen Oberflächen erreicht wird. Die Oberflächen sind hier beispielsweise von Staub oder Unreinheiten wie Rost und dergleichen zunächst zu befreien, bevor dann die Klebemasse, die beispielsweise in Form einer Kleberaupe ausgebildet sein kann, aufgetragen wird. Ist die Klebemasse aufgetragen, wird anschließend die Oberfläche des zweiten Substrats auf die Klebemasse aufgesetzt, wobei dann mittels Aushärtens der Klebemasse die feste Klebeverbindung hergestellt wird.

In der Industrie werden mehr und mehr derartige Klebeverbindungen eingesetzt, da im Zuge des Automatisierungsprozesses insbesondere Kleberaupen von Robotern schnell und einfach aufgetragen werden können, wobei dann auf den aufgetragenen Bereichen entsprechend Roboter die zu verbindenden Teile ansetzen können. Bei diesen nach dem Stand der Technik bekannten Klebeverbindungen, die auch insbesondere von ihrer Haftwirkung her sehr stark ausgebildet sind, ergibt sich das Problem, dass sie nur unter einem hohen Aufwand wieder gelöst werden können. Dabei kommt es nicht selten vor, dass insbesondere die Haftflächen zerstört werden, sodass diese nicht für eine Wiederverklebung benutzt werden können. Es ist dann erforderlich, dass beispielsweise nach Entfernen von Kleberresten die Oberfläche bearbeitet werden muss, und zwar derart, dass diese geschliffen oder poliert wird, damit eine Haftfläche für den Neuauftrag einer Klebemasse bereit ist.

Zum Stand der Technik ist noch zu erwähnen, dass in allen Prozessen und Schritten vor dem Kleben - wie beschrieben - eine Reinigung der Oberfläche gefordert ist. Die Reinigung wird derzeit mit Alkohol, Aceton oder Kombinationen aus rückstandsfreien Reinigern durchgeführt. Nach der Reinigung kann entweder ein zusätzlicher Primer aufgetragen werden. Alternativ können andere Zusatzschritte durchgeführt werden, die zu einer optimalen Klebung beitragen.

### Aufgabe

Der Erfindung liegt nach alldem die Aufgabe zugrunde, eine Substanz bereitzustellen, mittels derer Klebeverbindungen besser lösbar sind.

### Lösung

Erfindungsgemäß wird diese Aufgabe mittels einer Substanz mit den Merkmalen des Anspruchs 1 gelöst. Vorteilhafte Ausgestaltungen der Erfindung ergeben sich aus den Unteransprüchen 2 bis 10.

Die erfindungsgemäße Substanz ist dadurch gekennzeichnet, dass sie ein Gemisch aus mindestens zwei Estern und mindestens zwei Ethern umfasst, wobei mindestens ein Ester von einem natürlichen Ester und mindestens ein Ester von einem synthetischen Ester gebildet sind und wobei mindestens ein Ether von einem synthetischen Ether gebildet ist. Insbesondere kann die Substanz von insgesamt vier Bestandteilen gebildet sein, nämlich einem natürlichen und einem synthetischen Ester sowie zwei synthetischen Ethern.

Die erfindungsgemäße Substanz hat viele Vorteile. Insbesondere ermöglicht sie es, eine bestehende Klebeverbindung besonders einfach wieder lösen zu können. Dies liegt darin begründet, dass die Substanz geeignet ist, die Klebemasse lokal stark zu verflüssigen, das heißt deren Viskosität lokal stark abzusenken. Will man nun eine stark haftende Klebemasse wieder von einer Oberfläche entfernen, so besteht nach der Erfindung die Möglichkeit, die Substanz mittels Sprühens oder Auftragens auf die Klebeverbindung aufzubringen und hierdurch die Klebemasse zu lösen. Hierbei dringt die Substanz mittels Kapillarwirkung in die Klebemasse ein und verflüssigt diese in einem Grenzoberflächenbereich. Hierbei wird die Klebemasse aus der feinen Mikrostruktur der Oberfläche gelöst, sodass nach Diffusion des Lösemittels die Klebemasse von der Oberfläche rückstandslos und zerstörungsfrei entfernt werden kann. Eine aufwendige Nachbearbeitung der Oberfläche bzw. Oberfläche der miteinander zu verbindenden Substrate kann in aller Regel vollständig ausbleiben, sodass eine Wiederverklebung der Substrate nichts entgegensteht.

Überraschenderweise hat sich gezeigt, dass die erfindungsgemäße Substanz sich nicht nur zum Lösen von Klebeverbindungen eignet, sondern zudem auch zur Vorbereitung der betroffenen Oberflächen im Vorfeld einer Verklebung geeignet ist. Hierbei wird zunächst zur Vorbereitung einer jeweiligen Oberfläche deren Feinstrukturierung benetzt, mit der die Klebemasse in Verbindung treten soll. Aufgrund der verflüssigenden (bzw. die Viskosität herabsetzenden) Wirkung der Substanz auf die Klebemasse wird die Klebermasse in einem Grenzoberflächenbereich derart verflüssigt, dass sie in Mikroporenstrukturen der jeweiligen Oberfläche eindringen kann. Aufgrund dieser Ausbildung wird eine Art Verzahnung der Klebemasse und der Oberfläche im Mikrobereich geschaffen, die eine fast 100 %-ige Berührung der Klebemasse mit der Oberfläche erzielt. Hierdurch wird erreicht, dass die Haftwirkung der Klebemasse an der Oberfläche gegenüber dem Stand der Technik um das bis zu 8-fache erhöht wird. Die erfindungsgemäße Substanz ist folglich nicht nur zum Lösen von Klebeverbindungen geeignet, sondern kann in besonders überraschender Weise zudem dazu verhelfen, Klebeverbindung um eine vielfaches zu verstärken.

In einer vorteilhaften Ausgestaltung der erfindungsgemäßen Substanz umfasst diese sowohl polare als auch unpolare Bestandteile. Ferner ist es vorteilhaft, wenn die Substanz nicht wasserbasiert ist.

Es hat sich herausgestellt, dass die Wirkung der Substanz dann besonders ausgeprägt ist, wenn sie einen Gehalt zwischen 5 M-% und 50 M-% eines pflanzlichen Esters aufweist, wobei vorzugsweise der Ester von einem pflanzlichen Isopropylester gebildet ist. Grundsätzlich unabhängig davon kann es weiterhin besonders vorteilhaft sein, wenn die Substanz einen Gehalt zwischen 1 M-% und 15 M-%, vorzugsweise zwischen 5 M-% und 10 M-%, eines synthetischen Esters aufweist, wobei vorzugsweise der synthetische Ester von synthetischem Acetat gebildet ist. Ferner kann es grundsätzlich unabhängig von der übrigen Zusammensetzung der Substanz besonders vorteilhaft sein, wenn diese einen Gehalt zwischen 1 M-% und 15 M-% eines synthetischen Ethers aufweist, wobei vorzugsweise der synthetische Ether von einem kurzkettigen Polyether gebildet ist. Schließlich kann unabhängig von ihrer übrigen Zusammensetzung eine solche Substanz besonders vorteilhaft sein, die einen Gehalt zwischen 20 M-% und 85 M-% eines synthetischen Ethers aufweist, wobei vorzugsweise der synthetische Ether von einem Isomerengemisch eines Monomethylethers gebildet ist.

In einer besonders vorteilhaften Ausgestaltung der erfindungsgemäßen Substanz sind vier Bestandteile, nämlich ein pflanzlicher Ester, ein synthetischer Ester sowie zwei synthetische Ether, miteinander kombiniert, und zwar in der folgenden Weise:
i) Zwischen 25 M-% und 50 M-% des pflanzlichen Esters, der vorzugsweise von einem pflanzlichen Isopropylester gebildet ist;
ii) Zwischen 5 M-% und 15 M-% des synthetischen Esters, der vorzugsweise von synthetischem Acetat gebildet ist;
iii) Zwischen 5 M-% und 15 M-% des ersten synthetischen Ethers, der vorzugsweise von einem kurzkettigen Polyether gebildet ist;
iv) Zwischen 20 M-% und 65 M-% des zweiten synthetischen Ethers, der vorzugsweise von einem Isomerengemisch eines Monomethylethers gebildet ist.

Eine solche Substanz hat sich als besonders wirksam herausgestellt, und zwar sowohl betreffend die gewünschte Lösungswirkung zur möglichst leichten und rückstandsfreien Lösung einer bestehenden Klebeverbindung als auch zur Verbesserung der Klebewirkung von verwendeter Klebemasse.

In einer alternativen Ausgestaltung hat sich zudem folgende Zusammensetzung der Substanz als besonders vorteilhaft herausgestellt:
i) Zwischen 5 M-% und 20 M-% des pflanzlichen Esters, der vorzugsweise von einem pflanzlichen Isopropylester gebildet ist;
ii) Zwischen 1 M-% und 10 M-% des synthetischen Esters, der vorzugsweise von synthetischem Acetat gebildet ist;
iii) Zwischen 1 M-% und 10 M-% des ersten synthetischen Ethers, der vorzugsweise von einem kurzkettigen Polyether gebildet ist;
iv) Zwischen 50 M-% und 85 M-% des zweiten synthetischen Ethers, der vorzugsweise von einem Isomerengemisch eines Monomethylethers gebildet ist.

Auch eine Zusammensetzung in diesen Grenzen und mit diesen Bestandteilen erzielt die gewünschten Wirkungen besonders gut.

Erfindungsgemäß wird eine Substanz der vorstehend beschriebenen Art zur Herstellung einer Klebeverbindung genutzt. Hierbei kann insbesondere mindestens eine der Oberflächen der zu verbindenden Substrate in einem ersten Schritt mittels der Substanz gereinigt werden. Nach diesem Schritt bleibt ein spürbarer, leichter Rückstand der Substanz auf der jeweiligen Oberfläche. Dieser Rückstand führt dazu, dass die vorhandene Klebemasse an der Oberfläche gelöst wird. Dieser Prozess führt zu einer Hierbei wird erreicht, dass die auf der Oberfläche verbliebenen Rückstände der Substanz auf die Klebemasse einwirken können, wodurch die Viskosität der letzteren wesentlich verringert wird. In der direkten Folge dieses Vorgangs ist die Klebemasse aufgrund einer verbesserten Kriechfähigkeit nun in der Lage, in feinste Poren an der Oberfläche des jeweiligen Substrats einzudringen. Durch diesen Eindringeffekt wird eine Klebefläche, auf der die Klebemasse wirkt, wesentlich vergrößert und somit eine stark vergrößerte Klebekraft hervorgerufen. Die Klebekraft kann so in Abhängigkeit von Substrat und Klebemasse doppelt bis achtfach verstärkt werden. Neben der Änderung der Viskosität der Klebemasse hat auch die Änderung der Polarität des Verhältnisses Klebemasse zu Substrat, die durch die Substanz bewirkt wird einen Einfluss auf die Wirkung der Klebemasse.

Weiterhin wird die Substanz erfindungsgemäß zur Reinigung mindestens einer Oberfläche von miteinander zu verklebenden Substraten im Vorfeld der Herstellung der zugehörigen Klebeverbindung verwendet. Hierzu wird die Substanz auf die geklebten Oberflächen und/oder die Klebemasse auftragen. Die Substanz kriecht sodann infolge Kapillarwirkung in die Klebemasse bzw. einen zugehörigen Trägerstreifen, diffundiert in einen Grenzoberflächenbereich zwischen Klebemasse und Oberfläche des jeweiligen Substrats und löst die Klebemasse wieder von der Oberfläche ab. Letzteres geschieht infolge der beschriebenen Verflüssigung der Klebemasse, die von der Substanz bewirkt wird.

Ferner wird erfindungsgemäß ein Verfahren mit den Merkmalen des Anspruchs 13 vorgeschlagen. Eine vorteilhafte Ausgestaltung ergibt sich aus dem Unteranspruch 14.

Das erfindungsgemäße Verfahren ist dadurch gekennzeichnet, dass vor dem Auftragen der Klebemasse auf die Oberfläche des ersten Substrats eine Substanz nach einem der Ansprüche 1 bis 10 auf die Oberfläche aufgetragen wird. Dies hat den Effekt, dass Rückstände der Substanz, die beim späteren Auftragen der Klebemasse noch auf der Oberfläche vorhanden sind, auf die Klebemasse wirken können und diese in der vorstehend beschriebenen Weise verflüssigen. Die sich hieraus ergebenden Vorteile sind vorstehend bereits dargelegt. Insbesondere kann die Klebewirkung der Klebemasse um ein Vielfaches angehoben werden.

Vorteilhafterweise werden die Oberflächen beider Substrate, die mittels einer Klebeverbindung miteinander verbunden werden sollen, mit dem Substrat beschichtet.

In einer besonders vorteilhaften Ausgestaltung des erfindungsgemäßen Verfahrens wird mindestens eine der Oberflächen, vorzugsweise beide Oberflächen, der zu verbindenden Substrate mittels einer erfindungsgemäßen Substanz gereinigt. In besonders vorteilhafter Weise ist die Substanz, die zur Reinigung verwendet wird, dieselbe, die auch für die Vorbereitung der Oberfläche verwendet wird. Weiterhin ist es vorteilhaft, wenn dieselbe Substanz zur Lösung der Klebemasse verwendet wird, für den Fall, dass eine jeweilige Klebeverbindung gelöst werden soll.

Gemäß der Erfindung wird vorgeschlagen, dass sich durch Auftragen einer Substanz auf den Oberflächen des Substrates eine Haftverstärkung der aufgetragenen viskosen Klebemasse in Bezug zu den Substraten durch Aushärtung an den Oberflächen einstellt, wobei zum zerstörungsfreien und rückstandsfreien Lösen der Verbindung die identische Substanz ebenfalls verwendbar ist, ohne dass Klebemasse auf den Oberflächen verbleibt. In Weiterbildung ist die Substanz neben der Haftverstärkung auch zur Oberflächenreinigung des Substrates verwendbar. Die aufgetragene Substanz beeinflusst die Kriechfähigkeit der aufgetragenen Klebermasse im Grenzoberflächenbereich der viskosen Klebemasse, sodass insbesondere diese in die mikroskopisch vorhandenen Poren oder Täler der Oberfläche kriechen. Insbesondere diffundiert die Substanz zum rückstandsfreien Lösen durch Kapillarwirkung in die Klebemasse und reduziert infolge der Herabsetzung der Viskosität der Klebemasse deren Haftwirkung, wobei sich dann die Klebemasse von der Oberfläche des Substrates löst. Im Zuge der Herstellung der Klebeverbindung bildet die Substanz zunächst nach Auftragen einen leichten spürbaren Filmrückstand, auf den die viskose Masse aufgetragen wird. Bei Inkontakttreten der Klebemasse mit diesem Filmrückstand erfolgt das beschriebene Kriechen der zumindest in ihrer Grenzschicht verflüssigten Klebemasse, sodass die Klebemasse insbesondere in der oben beschriebenen Weise in die Täler bzw. Poren der Oberfläche eindringen kann.

Nach einer besonders vorteilhaften Ausgestaltung der Erfindung umfasst die Substanz ein polares Lösemittel. Hierbei bewirkt die Substanz neben der Beeinflussung der Viskosität der Klebemasse auch eine Änderung der Polarität des Verhältnisses Klebemasse zu Substrat.

Die Erfindung betrifft in gleicher Weise auch ein Verfahren zur Herstellung einer Klebeverbindung mit verstärkter Haftkraft, die sich dadurch anschließend zerstörungs- und rückstandsfrei wieder lösen lässt, wobei die Klebeverbindung die Oberfläche eines ersten Substrates, wie lackierte Oberflächen, Kunststoffoberflächen, Edelstahloberflächen, Stahl- und Holzoberflächen umfasst, auf der eine hoch viskose Klebemasse aufgetragen wird, auf die eine weitere Oberfläche eines zweiten Substrates, wie lackierte Oberflächen, Kunststoffoberflächen, Edelstahloberflächen, Stahl- oder Holzoberflächen angesetzt wird, wobei sich nach Aushärten der viskosen Klebemasse eine feste Verbindung zwischen den Substraten einstellt, wobei eine Substanz auf den Oberflächen des Substrates aufgetragen wird, die eine Haftkraftverstärkung der viskosen Klebemasse in Bezug zu den Substraten nach Aushärtung an den Oberflächen bewirkt und wobei zum zerstörungsfreien und rückstandsfreien Lösen der Verbindung die identische Substanz ebenfalls verwendet wird, ohne dass Klebemasse auf den Oberflächen verbleibt. Hierbei wird die Substanz neben der Haftverstärkung auch zur Oberflächenreinigung verwendet.

Die Erfindung betrifft in gleicher Weise auch eine Substanz für einen Klebeverbinder zwischen einem ersten Substrat und einem zweiten Substrat, wie diese merkmalsgemäß in den vorgeschilderten Ausführungen beschrieben wird. Die Substanz beeinflusst die Kriechfähigkeit der aufgetragenen Klebemasse im Grenzoberflächenbereich der viskosen Klebemasse. Zum rückstandsfreien Lösen durch Kapillarwirkung diffundiert die Substanz in der Klebeverbindung und reduziert somit die Haftverstärkung, sodass sich die Klebemasse von den Oberflächen des Substrates löst.

### Ausführungsbeispiele

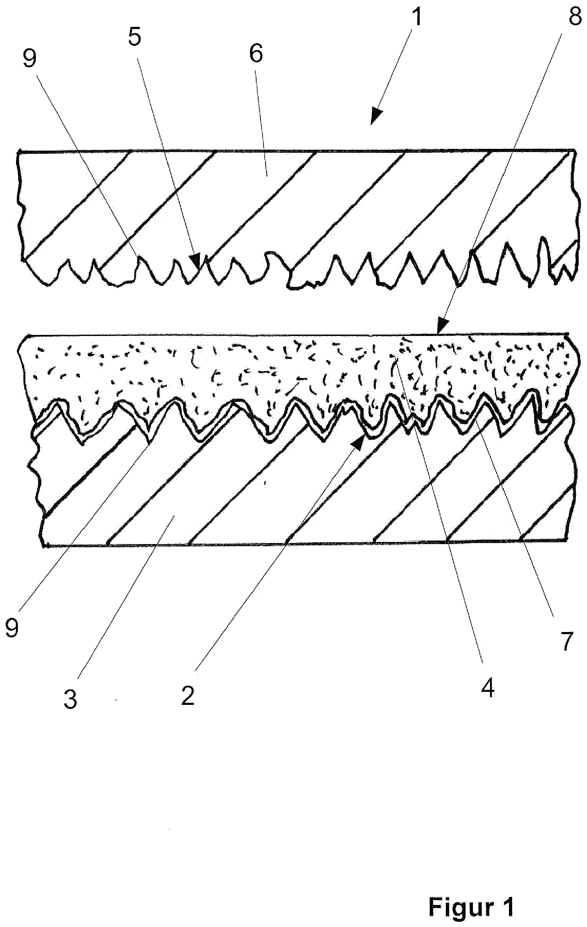

Ein Ausführungsbeispiel der Erfindung ist in der einzigen Zeichnung rein schematisch dargestellt und wird nachfolgend näher beschrieben. Es zeigt
- Fig. 1:: eine geschnittene Seitenansicht einer Klebeverbindung mit Mikroporenoberfläche.

Die Klebeverbindung **1** umfasst eine Oberfläche **2** eines ersten Substrates **3,** wie lackierte Oberflächen, Kunststoffoberflächen, Edelstahloberflächen, Stahl- und Holzoberflächen, auf die eine hoch viskose Klebemasse **4** auftragbar ist. Auf die Klebemasse **4** wird eine weitere Oberfläche **5** eines zweiten Substrats **6,** wie lackierte Oberflächen, Kunststoffoberflächen, Edelstahloberflächen, Stahl- oder Holzflächen aufgesetzt, wobei nach Aushärten der viskosen Klebemasse **4** sich eine feste Verbindung zwischen den Substraten **3, 6** einstellt.

Wie insbesondere aus der einzigen Figur erkennbar ist, stellt sich durch Auftragen einer Substanz **7** auf den Oberflächen **2, 5** des Substrates **3, 6** eine Haftverstärkung der aufgetragenen viskosen Klebemasse **4** in Bezug zu den Substraten **3, 6** nach Aushärten an den Oberflächen **2, 5** ein, wobei zum zerstörungsfreien und rückstandsfreien Lösen der Verbindung **1** die identische Substanz **7** ebenfalls verwendbar ist, ohne dass die Klebemasse **4** auf den Oberflächen **2, 5** verbleibt.

Hierbei ist die Substanz **7** neben der Haftverstärkung auch zur Oberflächenreinigung des Substrates **3, 6** verwendbar. Wie insbesondere aus der geschnittenen Ansicht erkennbar ist, beeinflusst die aufgetragene Substanz **7** die Kriechfähigkeit der aufgetragenen Klebemasse **4** im Grenzoberflächenbereich **8** der viskosen Klebemasse **4.** Hierbei wird die Wirkung ausgenutzt, wobei aufgrund des Herabsetzens der Viskosität im Grenzoberflächenbereich **8** die Klebemasse **4** bis in die Täler **9** oder Poren der Oberfläche **2, 5** eindringen kann, sodass dadurch eine Vergrößerung der Haftfläche in den Tälern **9** oder Poren gegeben ist. Dadurch entsteht, wie vergrößert in der Figur dargestellt, eine Art Verzahnung der Klebemasse **4** mit den Oberflächen **2, 5.** Durch Diffusion der Substanz **7** und Aushärtung verstärkt sich dadurch die Klebekraft bis zum 8-fachen.

Will man nun eine derart starke Haftverbindung wieder lösen, besteht die Möglichkeit, dass die Substanz **7** zum rückstandsfreien Lösen verwendet wird. Hierbei diffundiert die Substanz **7** nach Auftragen auf die Klebemasse mittels Kapillarwirkung in die Klebeverbindung **1,** sodass dann die Haftverstärkung wieder reduziert wird, wobei sich die Klebemasse **4** von der Oberfläche **2, 5** des Substrates **3, 6** löst. Die Klebemasse **4,** bzw. hier im vorliegenden Fall die Kleberaupe, kann dann einfach von Hand von der Oberfläche bzw. den Oberflächen **2, 5** abgezogen werden. Die rückstandslosen Oberflächen **2, 5** sind dann wieder für einen weiteren Klebevorgang einsetzbar.

In Weiterbildung der Erfindung bildet die Substanz **7** nach Auftrag einen leichten spürbaren Filmrückstand. Hierbei wird die viskose Klebemasse **4** auf den Filmrückstand aufgetragen. In diesem Zustand ergibt sich insbesondere die kurzfristige Verflüssigung der Grenzschicht der Klebemasse **4,** sodass dann entsprechend die Ausfüllung der Täler **9** in der Oberfläche **2, 5** erfolgen kann.

Nach einer besonders vorteilhaften Ausgestaltung der Erfindung umfasst die Substanz **7** ein polares Lösemittel, welches neben der Beeinflussung der Viskosität der Klebemasse **4** auch eine Änderung der Polarität des Verhältnisses Klebemasse **4** zu Substrat **3, 6** bewirkt.

In dem gezeigten Beispiel ist die Substanz **7** von einem Gemisch aus zwei Estern und zwei Ethern gebildet, wobei ein pflanzlicher Ester, ein synthetischer Ester sowie zwei synthetische Ether beteiligt sind. Der pflanzliche Ester ist hier von einem pflanzlichen Isopropylester gebildet. Er weist einen Gehalt an der Substanz **7** von 25 M-% auf. Der synthetische Ester ist von synthetischem Acetat gebildet. Er weist einen Gehalt von 15 M-% auf. Der erste synthetische Ether ist von einem kurzkettigen Polyether gebildet und der zweite synthetische Ether von einem Isomerengemisch eines Monomethylethers. Der Gehalt des kurzkettigen Polyethers beträgt in dem Beispiel 5 M-%, während der Gehalt des Monomethylethers 55 M-% aufweist. Die Substanz **7** ist nicht wasserbasiert.

### Bezugszeichenliste

- 1: Klebeverbindung
- 2: Oberfläche
- 3: Substrat
- 4: viskose Klebemasse
- 5: weitere Oberfläche
- 6: zweites Substrat
- 7: Substanz
- 8: Grenzoberflächenbereich
- 9: Täler

## Patentansprüche

1. Substanz (7) für eine Klebeverbindung (1) zwischen einem ersten Substrat (3), auf dessen Oberfläche (2) eine hoch viskose Klebemasse (4) auftragbar ist, und einem zweiten Substrat (6), dessen Oberfläche (5) auf die Klebemasse (4) aufsetzbar ist, wobei nach Aushärten der viskosen Klebemasse (4) sich eine feste Klebeverbindung (1) zwischen den Substraten (3, 6) einstellt,
**dadurch gekennzeichnet, dass**
die Substanz (7) ein Gemisch aus mindestens zwei Estern und mindestens zwei Ethern umfasst,
wobei mindestens ein Ester von einem natürlichen Ester und mindestens ein Ester von einem synthetischen Ester gebildet sind und
wobei mindestens ein Ether von einem synthetischen Ether gebildet ist.

2. Substanz (7) nach Anspruch 1, **dadurch gekennzeichnet, dass** die Substanz (7) sowohl polare als auch unpolare Bestandteile aufweist.

3. Substanz (7) nach Anspruch 1 oder 2, **dadurch gekennzeichnet, dass** die Substanz (7) nicht wasserbasiert ist.

4. Substanz (7) nach einem der Ansprüche 1 bis 3, **dadurch gekennzeichnet, dass** die Substanz (7) von einem Gemisch aus zwei Estern und zwei Ethern gebildet ist, wobei vorzugsweise beide Ether synthetisch sind.

5. Substanz (7) nach einem der Ansprüche 1 bis 4, **dadurch gekennzeichnet, dass** die Substanz (7) einen Gehalt zwischen 5 M-% und 50 M-% eines pflanzlichen Esters aufweist, wobei vorzugsweise der Ester von einem pflanzlichen Isopropylester gebildet ist.

6. Substanz (7) nach einem der Ansprüche 1 bis 5, **dadurch gekennzeichnet, dass** die Substanz (7) einen Gehalt zwischen 1 M-% und 15 M-%, vorzugsweise zwischen 5 M-% und 10 M-%, eines synthetischen Esters aufweist, wobei vorzugsweise der synthetische Ester von synthetischem Acetat gebildet ist.

7. Substanz (7) nach einem der Ansprüche 1 bis 6, **dadurch gekennzeichnet, dass** die Substanz (7) einen Gehalt zwischen 1 M-% und 15 M-% eines synthetischen Ethers aufweist, wobei vorzugsweise der synthetische Ether von einem kurzkettigen Polyether gebildet ist.

8. Substanz (7) nach einem der Ansprüche 1 bis 7, **dadurch gekennzeichnet, dass** die Substanz (7) einen Gehalt zwischen 20 M-% und 85 M-% eines synthetischen Ethers aufweist, wobei vorzugsweise der synthetische Ether von einem Isomerengemisch eines Monomethylethers gebildet ist.

9. Substanz (7) nach einem der Ansprüche 1 bis 8, **dadurch gekennzeichnet, dass** die Substanz (7) von einem pflanzlichen Ester, einem synthetischen Ester sowie zwei verschiedenen synthetischen Ethern gebildet ist, wobei die Substanz folgende Gehälter aufweist:
i) Zwischen 25 M-% und 50 M-% des pflanzlichen Esters, der vorzugsweise von einem pflanzlichen Isopropylester gebildet ist;
ii) Zwischen 5 M-% und 15 M-% des synthetischen Esters, der vorzugsweise von synthetischem Acetat gebildet ist;
iii) Zwischen 5 M-% und 15 M-% des ersten synthetischen Ethers, der vorzugsweise von einem kurzkettigen Polyether gebildet ist;
iv) Zwischen 20 M-% und 65 M-% des zweiten synthetischen Ethers, der vorzugsweise von einem Isomerengemisch eines Monomethylethers gebildet ist.

10. Substanz (7) nach einem der Ansprüche 1 bis 8, **dadurch gekennzeichnet, dass** die Substanz (7) von einem pflanzlichen Ester, einem synthetischen Ester sowie zwei verschiedenen synthetischen Ethern gebildet ist, wobei die Substanz folgende Gehälter aufweist:
i) Zwischen 5 M-% und 20 M-% des pflanzlichen Esters, der vorzugsweise von einem pflanzlichen Isopropylester gebildet ist;
ii) Zwischen 1 M-% und 10 M-% des synthetischen Esters, der vorzugsweise von synthetischem Acetat gebildet ist;
iii) Zwischen 1 M-% und 10 M-% des ersten synthetischen Ethers, der vorzugsweise von einem kurzkettigen Polyether gebildet ist;
iv) Zwischen 50 M-% und 85 M-% des zweiten synthetischen Ethers, der vorzugsweise von einem Isomerengemisch eines Monomethylethers gebildet ist.

11. Verwendung einer Substanz (7) nach einem der Ansprüche 1 bis 10 für eine Klebeverbindung (1), die Klebeverbindung (1) umfassend
- ein erstes Substrat (3),
- ein zweites Substrat (6) sowie
- eine hoch viskose Klebemasse (4),
wobei die Klebemasse (4) mittelbar oder unmittelbar auf eine Oberfläche (2) des ersten Substrates (3), aufgetragen ist,
wobei auf die Klebemasse (4) eine Oberfläche (5) des zweiten Substrates (6) mittelbar oder unmittelbar aufgesetzt ist,
wobei nach Aushärten der viskosen Klebemasse (4) sich eine feste Klebeverbindung (1) zwischen den Substraten (3, 6) einstellt,
wobei die Substanz (7) zwischen der Klebemasse (4) und der Oberfläche (2, 5) des jeweiligen Substrats (3, 6) aufgetragen ist.

12. Verwendung einer Substanz nach einem der Ansprüche 1 bis 10 zur Reinigung einer Oberfläche (2, 5) von miteinander zu verklebenden Substraten (3, 6) im Vorfeld der Herstellung einer Klebeverbindung (1) zum Verbinden der Substrate (3, 6).

13. Verfahren zur Herstellung einer Klebeverbindung (1) zur Verklebung zweier Substrate (3, 6), umfassend die folgenden Verfahrensschritte:
a) Eine hoch viskose Klebemasse (4) wird mittelbar oder unmittelbar auf eine Oberfläche (2) des ersten Substrats (3) aufgetragen.
b) Auf die Klebemasse (4) wird mittelbar oder unmittelbar eine Oberfläche (5) des zweiten Substrats (6) aufgesetzt.
c) Die Klebemasse (4) wird ausgehärtet, sodass sich eine feste Klebeverbindung (1) zwischen den Substraten (3, 6) einstellt,
**gekennzeichnet durch** den folgenden Verfahrensschritt:
d) Vor dem Auftragen der Klebemasse (4) auf die Oberfläche (2) des ersten Substrats (3) wird eine Substanz (7) nach einem der Ansprüche 1 bis 10 auf die Oberfläche (2) aufgetragen.

14. Verfahren nach Anspruch 13, **dadurch gekennzeichnet, dass** mittels einer Substanz (7) nach einem der Ansprüche 1 bis 10 mindestens eine der Oberflächen (2, 5), vorzugsweise beide Oberflächen (2, 5), der Substrate (3, 6) gereinigt werden, bevor die Substrate (3, 6) mittels der Klebemasse (4) miteinander verklebt werden.
